# EUROPÄISCHE PATENTSCHRIFT

(11) **EP 3 964 393 B1**
(45) Veröffentlichungstag und Bekanntmachung des Hinweises auf die Patenterteilung: **26.07.2023**
(21) Anmeldenummer: 21193642.2
(22) Anmeldetag: 27.08.2021
(51) Int. Cl.: B60P 3/39

(54) **HUBBETT FÜR EIN FREIZEITFAHRZEUG**
LIFTING BED FOR A RECREATIONAL VEHICLE
COUCHETTE REPLIABLE POUR VÉHICULE DE LOISIR

(30) Priorität: 27.08.2020 DE 102020122497
(43) Veröffentlichungstag der Anmeldung: 09.03.2022
(73) Patentinhaber: Niesmann+Bischoff GmbH, 56751 Polch (DE)
(72) Erfinder: BRANDL, Hubert, 56751 Polch (DE); MÜLLER, Helena, 65428 Rüsselsheim (DE)
(74) Vertreter: Waller, Stefan

(56) Entgegenhaltungen:
- CN-A- 107 672 513
- DE-U1- 20 118 211
- DE-U1-202004 015 388

## Beschreibung

Die Erfindung betrifft ein Hubbett für ein Freizeitfahrzeug sowie ein Freizeitfahrzeug mit einem solchen Hubbett.

Im Stand der Technik sind Freizeitfahrzeuge bekannt. Unter einem Freizeitfahrzeug wird ein Fahrzeug oder Anhänger verstanden, welches oder welcher zumindest ein mobil einsetzbares Element zum Camping aufweist oder zumindest temporär eine Einrichtung zum Campen aufweisen kann. Unter einem Freizeitfahrzeug wird insbesondere ein Campingfahrzeug verstanden. Unter einem Freizeitmobil wird ein motorisiertes Freizeitfahrzeug verstanden. Unter einem Campingfahrzeug wird vorliegend ein Wohnmobil oder ein Wohnwagen verstanden, also vorzugsweise diejenigen Fahrzeuge oder Anhänger, bei denen ein Nutzer eine Möglichkeit zum Schlafen oder Wohnen in diesem Fahrzeug hat. Eine Motorisierung der Fahrzeuge ist nicht erforderlich. Eine andere Bezeichnung für ein Wohnmobil ist zum Beispiel ein Reisemobil. Ein Wohnwagen kann zum Beispiel alternativ als Caravan oder Campinganhänger bezeichnet werden.

Bisher bekannte Hubbetten sind in Bezug auf die Raumnutzung problembehaftet und erweisen sich gerade in Freizeitfahrzeugen mit geringer Stehhöhe als unpraktisch. Bisher bekannte Hubbetten weisen eine Trägereinheit auf, auf welcher ein zugeordnetes Matratzenelement aufliegt. Sie sind unterhalb einer Decke so angeordnet, dass sie in einer Staustellung direkt an der Decke verbracht sind, um möglichst wenig in den Raum darunter einzudringen. Zumeist liegt die Staustellung des Hubbettes bei Tag vor, so dass übliche Einrichtungen wie eine Küchenzeile oder eine Sitzecke frei zugänglich sind und bequem genutzt werden können. Diese Einrichtungen sind über einen Gang erreichbar, welcher sich üblicherweise in Längsrichtung weitgehend mittig über die Länge des Freizeitfahrzeugs erstreckt, wobei beidseits des Gangs die Einrichtungen angeordnet sind. Oberhalb dieses Gangs ist das bekannte Hubbett angeordnet, welches in Staustellung in einen oberen Gangbereich einragt. Weist das Freizeitfahrzeug eine ausreichende Stehhöhe auf, stört das gangeinragende Hubbett in Staustellung nicht, da der Gang zweckmäßig nutzbar ist. Liegt jedoch eine geringe Stehhöhe vor, die bereits ohne Hubbett gerade so groß ist, dass eine Person darin stehen kann, ist ein oberhalb dieses Gangs angeordnetes Hubbett in seiner Staustellung sehr unpraktisch. Ein solches Hubbett ragt in Staustellung derart in den Gangbereich ein, dass ein aufrechtes bzw. zweckmäßiges Nutzen des Gangs kaum oder gar nicht möglich ist.

Ferner sind Hubbetten bekannt, die sich parallel zum Gang erstrecken und so in einem Innenraum eines Freizeitfahrzeugs angeordnet sind, dass sie in ihrer Staustellung in den Gangbereich und insbesondere den oberen Gangbereich kaum einragen. Diese Lösungen sind jedoch ebenfalls problembehaftet. Da der Innenraum eines Freizeitfahrzeugs nur eine sehr begrenzte Breite aufweist, können die Trägereinheiten derartiger Hubbetten nur sehr schmal ausgeführt werden. Diese Hubbetten weisen in ihrer Nutzstellung nur eine geringe Breite auf und bieten somit kaum Komfort. Ein Doppelbett ist in dieser gangparallelen Anordnung undenkbar, da es in seiner Staustellung in den Gangbereich einragt, wie es ein zum Gang rechtwinklig angeordnetes Bett ebenfalls tut. Dokument DE 201 18 211 U1 offenbart ein Hubbett für ein Freizeitfahrzeug gemäß den ersten Teil des Anspruchs 1.

Eine Aufgabe der vorliegenden Erfindung liegt darin, den Stand der Technik zu verbessern. Es ist insbesondere eine Aufgabe der Erfindung, ein Hubbett für ein Freizeitfahrzeug anzugeben, welches, insbesondere in der Staustellung, aus Gründen eines ästhetischen Designs möglichst unauffällig in die Fahrzeugdecke integriert werden kann, ohne die Notwendigkeit, die Stehhöhe im Inneren des restlichen Freizeitfahrzeugs zu verringern oder das Dach konstruktiv umzugestalten, insbesondere eine Stufe im Dach vorzusehen. Das erfindungsgemäße Hubbett soll weiterhin eine äußerst niedrige Bauhöhe aufweisen.

Diese Aufgabe wird durch ein Hubbett mit den Merkmalen des unabhängigen Patentanspruchs 1 gelöst. Vorteilhafte Weiterbildungen der Erfindung sind in den Unteransprüchen angegeben.

Folgendes Begriffliche sei erläutert:
Das Hubbett kann in zwei unterschiedlichen Stellungen angeordnet werden: eine Staustellung und eine Nutzstellung. In der Nutzstellung ist das Hubbett horizontal oder waagerecht angeordnet, in der Staustellung ist das Hubbett schräg angeordnet, zum Beispiel kann eine Kopfseite im Fahrzeug niedriger sein und die Fußseite im Fahrzeughöhe angeordnet sein. Es kann jedoch auch die Kopfseite im Fahrzeug höher und die Fußseite im Fahrzeug niedriger angeordnet sein. Ausgehend von der Nutzstellung des Hubbetts kann das Hubbett in die Staustellung überführt werden, indem die Kopfseite oder die Fußseite im Fahrzeug nach oben, d. h. zum Dach hin, verstellt wird, sodass sowohl die Kopfseite als auch die Fußseite des Hubbetts dicht am Dach anliegen. Zur Verdeutlichung sei erwähnt, dass an der Stelle das Dach nicht gerade verläuft. Das Hubbett kann vorne im Freizeitfahrzeug oder auch an einer hinteren Position im Freizeitfahrzeug angeordnet sein. In der Staustellung, in der das Hubbett schräg angeordnet ist, verläuft ein Gradient der Ebene des Hubbettes oder der Ebene des ersten Teils der Matratze bevorzugt parallel oder antiparallel zur Längsachse des Freizeitfahrzeugs bzw. der Fahrtrichtung.

Unter der Höhe des Hubbetts wird eine Entfernung des Hubbetts vom Fußboden im Inneren des Freizeitfahrzeuges bzw. eine Entfernung des Hubbetts von der Fahrbahn, auf dem das Freizeitfahrzeug angeordnet ist, verstanden.

Ein Kerngedanke der Erfindung besteht darin, dass die Matratze einen ersten Teil und einen zweiten, relativ zum ersten Teil klappbaren, Teil aufweist und der erste Teil und der zweite Teil der Matratze in der Staustellung, in der die Matratze schräg im Fahrzeug angeordnet ist, im abgeklappten Zustand des zweiten Teils der Matratze an einem oberen Ende der Matratze zusammen eine horizontale ebene Fläche bilden, so dass das obere Ende der Matratze in der Staustellung im abgeklappten Zustand an einer horizontal verlaufenden Decke anliegen kann. Hierdurch wird es ermöglicht, dass das Hubbett in der Staustellung möglichst unauffällig in die Fahrzeugdecke integriert ist, ohne die Notwendigkeit, die Stehhöhe im Inneren des restlichen Freizeitfahrzeugs zu verringern oder das Dach konstruktiv umzugestalten, insbesondere eine Stufe im Dach vorzusehen.

Gemäß einer bevorzugten Ausführungsform ist das erste Ende des Hubbetts ein Kopfende des Hubbetts und das zweite Ende des Hubbetts ein Fußende des Hubbetts.

Gemäß einer weiteren bevorzugten Ausführungsform ist der erste Teil der Matratze mithilfe eines Scharniers gegenüber dem zweiten Teil der Matratze klappbar. Hierdurch wird vorteilhafterweise erreicht, dass der zweite Teil der Matratze gegenüber dem ersten Teil der Matratze klappbar ist.

Gemäß noch einer weiteren, bevorzugten Ausführungsform ist das Scharnier ein textiles Scharnier. Hierdurch wird vorteilhafterweise erreicht, dass die Matratze lediglich textile Komponenten aufweist, so dass Matratze in einfacher Art und Weise herstellbar ist.

Gemäß einer anderen Ausführungsform verläuft das Scharnier auf einer Oberfläche der Matratze senkrecht zur Längsachse der Matratze. Hierdurch wird vorteilhafterweise erreicht, dass der zweite Teil der Matratze gegenüber dem ersten Teil der Matratze einfach klappbar ist. Ferner wird vorteilhafterweise erreicht, dass das Verklappen entlang der Längsachse der Matratze erfolgt.

Bevorzugt ist der zweite, relativ zum ersten Teil klappbare, Teil keilförmig. Dies bewirkt, dass ein Teil des ersten Teils der Matratze, welcher unterhalb des zweiten Teils direkt angrenzend zu diesem angeordnet ist, ebenfalls keilförmig ist.

Bevorzugt verläuft eine Unterseite des zweiten keilförmigen Teils der Matratze in der Staustellung im nicht weggeklappten Zustand horizontal. Das Wegklappen des zweiten Teils, welcher oberhalb des ersten Teils angeordnet ist, bewirkt somit, dass dort, wo der zweite Teil der Matratze auf dem ersten Teil der Matratze auflag, der erste Teil der Matratze eine horizontale Fläche bildet und dass dort, wo der umgeklappte zweite Teil der Matratze auf dem ersten Teil aufliegt, derjenige Teil des zweiten Teils der Matratze, welcher im nicht weggeklappten Zustand auf dem ersten Teil der Matratze aufliegt, zusammen mit dem oben genannten ersten Teil der Matratze eine horizontale Fläche bildet. Diese horizontale Fläche kann vorteilhafterweise in platzsparende Weise an eine horizontale Decke im Inneren des Freizeitfahrzeugs angeordnet werden.

Gemäß noch einer weiteren Ausführungsform ist der zweite, relativ zum ersten Teil klappbare, Teil der Matratze ausgehend vom ausgeklappten Zustand über die nach oben zeigende Vertikale zum ersten Ende der Matratze hin in den geklappten Zustand überführbar. Hierdurch wird vorteilhafterweise erreicht, dass der zweite Teil in einfacher Art und Weise von oben auf den ersten Teil der Matratze geklappt werden kann.

Gemäß einer anderen Ausführungsform weist das Hubbett ferner ein keilförmiges Kissen auf, welches in einem Freiraum zwischen der Matratze und dem Dach des Freizeitfahrzeugs angeordnet ist oder anordenbar ist. Hierdurch wird vorteilhafterweise erreicht, dass der Zwischenraum durch das keilförmige Kissen kaschiert wird.

In einem weiteren Aspekt wird die Aufgabe der Erfindung gelöst durch ein Freizeitfahrzeug mit einem Hubbett nach einem der vorangegangenen Ansprüche.

Ein Ausführungsbeispiel der Erfindung ist in den Zeichnungen dargestellt und wird in der nachfolgenden Beschreibung näher erläutert.

Figur 1 und Figur 2 zeigen jeweils einen Innenraum eines Freizeitfahrzeugs des Stands der Technik, bei dem für eine Integration eines Hubbetts in der Decke ein Teil des Dachs abgehängt ist, was die Stehhöhe lokal verringert.

Figur 3 zeigt einen Querschnitt durch ein Freizeitfahrzeug in einem Bereich des vorderen Endes des Freizeitfahrzeugs mit einem schräg angeordneten Hubbett in Stauposition mit einer Matratze des Stands der Technik.

Figur 4 zeigt ein erfindungsgemäßes Hubbett für ein Freizeitfahrzeug gemäß einer Ausführungsform der Erfindung.

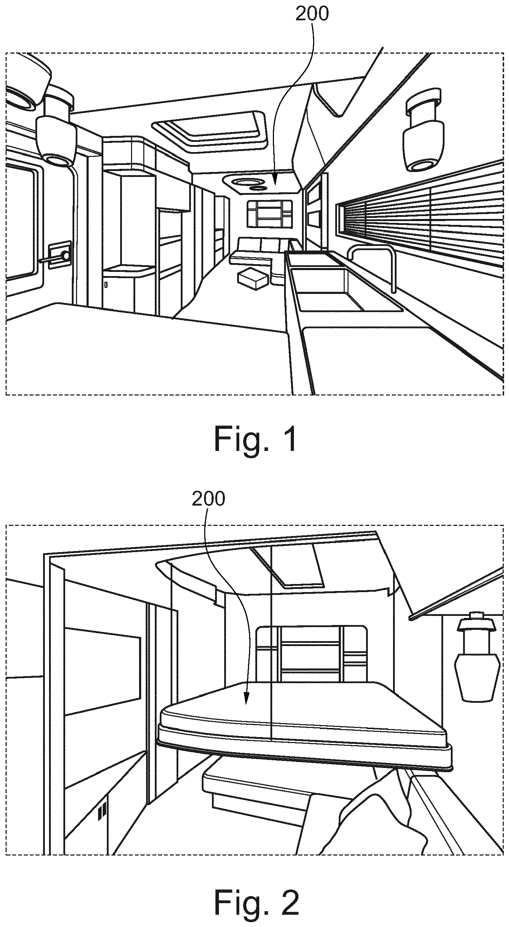

Figur 1 und Figur 2 zeigen jeweils einen Innenraum eines Freizeitfahrzeugs des Stands der Technik, bei dem für eine Integration eines Hubbetts 200 in der Decke ein Teil des Dachs abgehängt ist, was die Stehhöhe lokal verringert. In Figur 1 ist das Hubbett 200 in der Stauposition in der Decke. In Figur 2 befindet sich das Hubbett 200 in der Nutzposition.

Bei der in den Figuren 1 und 2 dargestellten Lösung des Stands der Technik ist die Stehhöhe unnötig verringert. Ferner kann hierbei eine aufwändige Dachkonstruktion vonnöten sein, falls im Dach eine Stufe vorgesehen ist, in die das Hubbett 200 verschwinden kann.

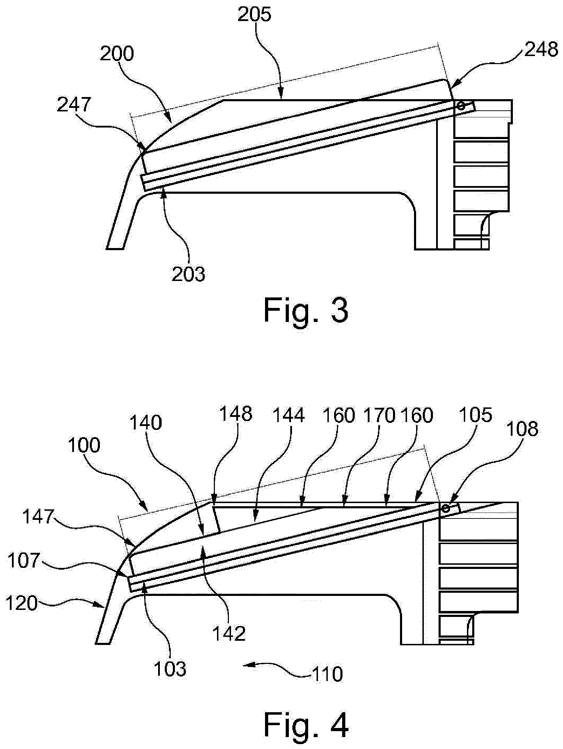

Figur 3 zeigt einen Querschnitt durch eine hypothetische Anordnung eines Freizeitfahrzeugs in einem Bereich des vorderen Endes des Freizeitfahrzeugs 220 mit einem schräg angeordneten Hubbett in Stauposition mit einer Matratze 240 des Stands der Technik. Man sieht, dass eine gewöhnliche Matratze 240 nicht zwischen das Dach 205 des Freizeitfahrzeugs und der Tragekonstruktion 203 des Hubbetts 200 passt, so dass die Matratze 240 über das Dach 205 des Freizeitfahrzeugs 220 herausstehen würde, falls dies möglich wäre. Ein Freiraum 280 zwischen der Matratze 240 und dem Dach 205 des Freizeitfahrzeugs 220 müsste mithilfe eines großen keilförmigen Kissens kaschiert werden, was aus ästhetischen Gründen nicht gewollt ist. Die Matratze 240 weist ein erstes Ende 247, welches sich entlang der Fahrtrichtung des Freizeitfahrzeugs 220 gesehen an einem vorderen Ende befindet, und ein zweites Ende 248, welches sich entlang der Fahrtrichtung des Freizeitfahrzeugs 220 gesehen an einem hinteren Ende befindet, auf.

Figur 4 zeigt ein erfindungsgemäßes Hubbett 100 für ein Freizeitfahrzeug 120 gemäß einer Ausführungsform der Erfindung. In der vorliegenden Staustellung des Hubbetts 100 ist eine Ebene des Hubbetts 100 schräg im Inneren des Freizeitfahrzeugs 120 angeordnet. In dieser Staustellung weist ein erstes Ende 107 des Hubbetts 100 eine niedrigere Höhe als ein zweites Ende 108 des Hubbetts 100 auf. Das erste Ende 107 des Hubbetts 100 befindet sich entlang der Fahrtrichtung 110 des Freizeitfahrzeugs 120 gesehen an einem vorderen Ende, und das zweite Ende 108 das Hubbetts 100 befindet sich entlang der Fahrtrichtung 110 des Freizeitfahrzeugs 120 gesehen an einem hinteren Ende.

Das Hubbett 100 weist eine Matratze 140 auf, welche wiederum einen ersten Teil 142 und einen zweiten, relativ zum ersten Teil 142 klappbaren, keilförmigen Teil 144 aufweist. Die Matratze 140 befindet sich in der Darstellung der Figur 4 in der Stauposition in einem ab- oder weggeklappten Zustand.

Der erste Teil 142 der Matratze 140 ist im ausgeklappten Zustand der Matratze 140 am ersten Ende 107 des Hubbetts 100 angeordnet. Der zweite klappbare Teil 144 ist im ausgeklappten Zustand der Matratze 140 am zweiten Ende 108 des Hubbetts 100 angeordnet ist

Der erste Teil 142 der Matratze 140 ist mithilfe eines textilen Scharniers 170 gegenüber dem zweiten Teil 144 der Matratze 140 klappbar ausgeführt. Das Scharnier 170 verläuft auf einer Oberfläche der Matratze 140 senkrecht zur Längsachse der Matratze 140.

Der erste Teil 142 und der zweite Teil 144 der Matratze 140 bilden in der Staustellung im ab- oder weggeklappten Zustand an einem oberen Ende der Matratze 140 eine horizontale, ebene Fläche 160. Im Gegensatz zu Figur 3 sieht man nun, dass mit der erfindungsgemäßen Lösung, d. h. mit der weggeklappten Matratze 140, zum einen die Matratze 140 zwischen das Dach 105 des Freizeitfahrzeugs 120 und der Tragekonstruktion 103 des Hubbetts 100 passt und zum anderen der erste Teil 142 und der zweite Teil 144 der Matratze 140 in der Staustellung im abgeklappten Zustand an einem oberen Ende der Matratze 140 eine horizontale ebene Fläche 160 bildet, so dass die Matratze 140 direkt am Dach 105 des Freizeitfahrzeugs 120 anliegt. Der Freiraum 180 zwischen der Matratze 140 und dem Dach 105 des Freizeitfahrzeugs 120 kann mithilfe eines kleinen keilförmigen Kissens kaschiert werden.

## Patentansprüche

1. Hubbett (100) für ein Freizeitfahrzeug (120), wobei eine Ebene des Hubbetts (100) in einer Staustellung des Hubbetts (100) schräg im Inneren des Freizeitfahrzeugs (120) angeordnet ist, wobei in der Staustellung ein erstes Ende (107) des Hubbetts (100) eine niedrigere Höhe als ein zweites Ende (108) des Hubbetts (100) aufweist; wobei das Hubbett (100) eine Matratze (140) aufweist;
wobei bei bestimmungsgemäßen Gebrauch der Matratze (140) und des Hubbettes (100) in der Nutzstellung des Hubbetts (100) ein erstes Ende (147) der Matratze (140) am ersten Ende (107) des Hubbettes (100) und ein zweites Ende (148) der Matratze (140) am zweiten Ende (108) des Hubbettes (100) angeordnet ist;
wobei die Matratze (140) einen ersten Teil (142) und einen zweiten, relativ zum ersten Teil (142) klappbaren, Teil (144) aufweist,
**dadurch gekennzeichnet, dass**
der zweite klappbare Teil (144) im ausgeklappten Zustand der Matratze (140) am zweiten Ende (108) des Hubbettes (100) angeordnet ist; und
wobei der erste Teil (142) und der zweite Teil (144) der Matratze (140) in der Staustellung im ab- oder weggeklappten Zustand an einem oberen Ende der Matratze (140) eine horizontale, ebene Fläche (160) bilden.

2. Hubbett (100) nach Anspruch 1,
**dadurch gekennzeichnet, dass**
das erste Ende des Hubbetts (100) ein Kopfende des Hubbetts (100) und das zweite Ende des Hubbetts (100) ein Fußende des Hubbetts (100) ist.

3. Hubbett (100) nach Anspruch 1 oder 2,
**dadurch gekennzeichnet, dass**
der erste Teil (142) der Matratze (140) mithilfe eines Scharniers (170) gegenüber dem zweiten Teil (144) der Matratze (140) klappbar ist.

4. Hubbett (100) nach dem vorangegangenen Anspruch,
**dadurch gekennzeichnet, dass**
das Scharnier (170) ein textiles Scharnier ist.

5. Hubbett (100) nach Anspruch 3 oder 4,
**dadurch gekennzeichnet, dass**
das Scharnier (170) auf einer Oberfläche der Matratze (140) senkrecht zur Längsachse der Matratze (140) verläuft.

6. Hubbett (100) nach einem der vorangegangenen Ansprüche,
**dadurch gekennzeichnet, dass**
der zweite, relativ zum ersten Teil (142) klappbare, Teil (144) keilförmig ist.

7. Hubbett (100) nach dem vorangegangenen Anspruch,
**dadurch gekennzeichnet, dass**
eine Unterseite des zweiten, keilförmigen Teils (144) der Matratze (140) in der Staustellung im nicht weggeklappten Zustand horizontal verläuft.

8. Hubbett (100) nach einem der vorangegangenen Ansprüche,
**dadurch gekennzeichnet, dass**
der zweite, relativ zum ersten Teil klappbare, Teil (144) der Matratze (140) ausgehend vom ausgeklappten Zustand über die nach oben zeigende Vertikale zum ersten Ende der Matratze (140) hin in den weggeklappten Zustand überführbar ist.

9. Hubbett (100) nach einem der vorangegangenen Ansprüche, ferner aufweisend:
ein keilförmiges Kissen, welches in einem Freiraum (180) zwischen der Matratze (140) und dem Dach (105) des Freizeitfahrzeugs angeordnet ist.

10. Freizeitfahrzeug (120) mit einem Hubbett (100) nach einem der vorangegangenen Ansprüche.

## Claims

1. Fold-down bed (100) for a recreational vehicle (120), wherein, in a stowage position of the fold-down bed (100), a plane of the fold-down bed (100) is arranged obliquely in the interior of the recreational vehicle (120), wherein, in the stowage position, a first end (107) of the fold-down bed (100) is at a lower height than a second end (108) of the fold-down bed (100); wherein the fold-down bed (100) has a mattress (140); wherein when the mattress (140) and the fold-down bed (100) are being used as intended, in the use position of the fold-down bed (100), a first end (147) of the mattress (140) is arranged at the first end (107) of the fold-down bed (100) and a second end (148) of the mattress (140) is arranged at the second end (108) of the fold-down bed (100) ;
wherein the mattress (140) has a first part (142) and a second part (144), which can be swung relative to the first part (142),
**characterized in that**,
in the swung-out state of the mattress (140), the second, swing-action part (144) is arranged at the second end (108) of the fold-down bed (100); and
wherein in the stowage position, in the swung-down or swung-away state, the first part (142) and the second part (144) of the mattress (140) form a horizontal, planar surface (160) at an upper end of the mattress (140) .

2. Fold-down bed (100) according to Claim 1,
**characterized in that**
the first end of the fold-down bed (100) is a head end of the fold-down bed (100) and the second end of the fold-down bed (100) is a foot end of the fold-down bed (100) .

3. Fold-down bed (100) according to Claim 1 or 2,
**characterized in that**
the first part (142) of the mattress (140) can be swung in relation to the second part (144) of the mattress (140) with the aid of a hinge (170).

4. Fold-down bed (100) according to the preceding claim,
**characterized in that**
the hinge (170) is a textile hinge.

5. Fold-down bed (100) according to Claim 3 or 4,
**characterized in that**
the hinge (170) runs on a surface of the mattress (140) in a direction perpendicular to the longitudinal axis of the mattress (140).

6. Fold-down bed (100) according to one of the preceding claims,
**characterized in that**
the second part (144), which can be swung relative to the first part (142), is wedge-shaped.

7. Fold-down bed (100) according to the preceding claim,
**characterized in that**
in the stowage position, when not in a swung-away state, an underside of the second, wedge-shaped part (144) of the mattress (140) runs horizontally.

8. Fold-down bed (100) according to one of the preceding claims,
**characterized in that**,
starting from the swung-out state, the second part (144) of the mattress (140), which can be swung relative to the first part, can be transferred via the upwardly oriented vertical, in the direction of the first end of the mattress (140), into the swung-away state.

9. Fold-down bed (100) according to one of the preceding claims,
also having:
a wedge-shaped pad, which is arranged in a free space (180) between the mattress (140) and the roof (105) of the recreational vehicle.

10. Recreational vehicle (120) having a fold-down bed (100) according to one of the preceding claims.

## Revendications

1. Couchette repliable (100) pour un véhicule de loisir (120), un plan de la couchette repliable (100), dans une position de rangement de la couchette repliable (100), étant agencé en oblique à l'intérieur du véhicule de loisir (120) ; dans la position de rangement, une première extrémité (107) de la couchette repliable (100) présentant une hauteur plus basse qu'une deuxième extrémité (108) de la couchette repliable (100) ;
la couchette repliable (100) présentant un matelas (140) ;
lors de l'utilisation prévue du matelas (140) et de la couchette repliable (100) dans la position d'utilisation de la couchette repliable (100), une première extrémité (147) du matelas (140) étant agencée à la première extrémité (107) de la couchette repliable (100) et une deuxième extrémité (148) du matelas (140) étant agencée à la deuxième extrémité (108) de la couchette repliable (100) ;
le matelas (140) présentant une première partie (142) et une deuxième partie (144) rabattable par rapport à la première partie (142),
**caractérisée en ce que**
la deuxième partie rabattable (144) est agencée à la deuxième extrémité (108) de la couchette repliable (100) à l'état déployé du matelas (140) ; et
la première partie (142) et la deuxième partie (144) du matelas (140) formant une surface plane horizontale (160) à une extrémité supérieure du matelas (140) dans la position de rangement dans l'état rabattu ou replié.

2. Couchette repliable (100) selon la revendication 1, **caractérisée en ce que** la première extrémité de la couchette repliable (100) est une extrémité de tête de la couchette repliable (100) et la deuxième extrémité de la couchette repliable (100) est une extrémité de pied de la couchette repliable (100).

3. Couchette repliable (100) selon la revendication 1 ou 2, **caractérisée en ce que** la première partie (142) du matelas (140) est rabattable au moyen d'une charnière (170) par rapport à la deuxième partie (144) du matelas (140) .

4. Couchette repliable (100) selon la revendication précédente, **caractérisée en ce que** la charnière (170) est une charnière textile.

5. Couchette repliable (100) selon la revendication 3 ou 4, **caractérisée en ce que** la charnière (170) s'étend sur une surface du matelas (140) perpendiculairement à l'axe longitudinal du matelas (140).

6. Couchette repliable (100) selon l'une quelconque des revendications précédentes, **caractérisée en ce que** la deuxième partie (144), rabattable par rapport à la première partie (142), est en forme de coin.

7. Couchette repliable (100) selon la revendication précédente, **caractérisée en ce qu'**un côté inférieur de la deuxième partie (144) en forme de coin du matelas (140) s'étend horizontalement dans la position de rangement à l'état non replié.

8. Couchette repliable (100) selon l'une quelconque des revendications précédentes, **caractérisée en ce que** la deuxième partie (144), rabattable par rapport à la première partie, du matelas (140) peut être transférée de l'état déployé à l'état replié en passant par la verticale dirigée vers le haut vers la première extrémité du matelas (140).

9. Couchette repliable (100) selon l'une quelconque des revendications précédentes, présentant en outre :
un coussin en forme de coin agencé dans un espace libre (180) entre le matelas (140) et le toit (105) du véhicule de loisir.

10. Véhicule de loisir (120) avec une couchette repliable (100) selon l'une quelconque des revendications précédentes.
